# EUROPÄISCHE PATENTANMELDUNG

(11) **EP 3 563 675 A1**
(43) Veröffentlichungstag der Anmeldung: **06.11.2019**
(21) Anmeldenummer: 19171132.4
(22) Anmeldetag: 25.04.2019
(51) Int. Cl.: A01K 1/02

(54) **TRANSPORTVORRICHTUNG FÜR TIERE**

(30) Priorität: 30.04.2018 DE 102018003536
(71) Anmelder: DOGSTYLER Soest GmbH, 59494 Soest (DE)
(72) Erfinder:
(74) Vertreter: Vossius & Partner Patentanwälte Rechtsanwälte mbB

(57) **Zusammenfassung**

Die Erfindung betrifft eine Transportvorrichtung (10) für Tiere zur Anordnung in einem Innenraum eines Kraftfahrzeugs mit wenigstens einem Bodenelement (12) und mit wenigstens zwei gegenüberliegenden Seitenelementen (14), welche zusammen einen Aufnahmeraum (16) definieren, wobei in dem Aufnahmeraum (16) wenigstens ein Trennelement (24) zwischen den wenigstens zwei Seitenelementen (14) angeordnet ist, mittels welchem der Aufnahmeraum (16) in zwei Teilräume (26) unterteilt ist, wobei die Transportvorrichtung (10) für jeden der zwei Teilräume (26) einen separaten, zugeordneten Zugang aufweist, welche sich jeweils zwischen den wenigstens zwei Seitenelementen (14) erstrecken und an gegenüberliegenden Seiten der Transportvorrichtung (10) angeordnet sind.

## Beschreibung

Die Erfindung betrifft eine Transportvorrichtung für Tiere zur Anordnung in einem Innenraum eines Kraftfahrzeugs, insbesondere eines Personenkraftwagens.

Mittels Transportvorrichtungen für Tiere können jeweilige Tiere, insbesondere Haustiere wie beispielsweise Hunde, sicher in einem Innenraum eines Kraftfahrzeugs transportiert werden. Die Transportvorrichtung kann dabei auch als Tiertransportvorrichtung bezeichnet werden. Dabei ist es wichtig, für die jeweiligen Tiere einen ausreichenden Komfort zu schaffen, damit diese einen Transport in der Transportvorrichtung akzeptieren und auch um deren Gesundheit zu schonen. Insbesondere kann ein sich unwohl fühlendes Tier unruhig sein und damit einen Fahrer des Kraftfahrzeugs ablenken, wodurch potenziell gefährliche Situationen entstehen können.

Aufgabe der vorliegenden Erfindung ist es, eine Transportvorrichtung für Tiere zur Anordnung in einem Innenraum eines Kraftfahrzeugs zu schaffen, welche besonders vielseitig zum sicheren Transport von Tieren in einem Innenraum eines Kraftfahrzeugs einsetzbar ist.

Diese Aufgabe wird erfindungsgemäß durch den Gegenstand des unabhängigen Patentanspruchs gelöst. Vorteilhafte Ausgestaltungen mit zweckmäßigen Weiterbildungen der Erfindung sind in den jeweiligen Unteransprüchen angegeben.

Die Erfindung betrifft eine Transportvorrichtung für Tiere zur Anordnung in einem Innenraum eines Kraftfahrzeugs, insbesondere einem Passagierinnenraum eines Personenkraftwagens. Die Transportvorrichtung umfasst dabei wenigstens ein Bodenelement und wenigstens zwei gegenüberliegende Seitenelemente, welche zusammen einen Aufnahmeraum definieren. In dem Aufnahmeraum ist wenigstens ein Trennelement zwischen den wenigstens zwei Seitenelementen angeordnet, mittels welchem der Aufnahmeraum in zwei Teilräume unterteilt ist. Die Transportvorrichtung weist dabei für jeden der zwei Teilräume einen separaten, zugeordneten Zugang auf, welcher sich jeweils zwischen den wenigstens zwei Seitenelementen erstreckt und an gegenüberliegenden Seiten der Transportvorrichtung angeordnet ist.

Die Transportvorrichtung ist somit dahingehend besonders vielseitig einsetzbar, dass mittels einer einzigen Transportvorrichtung wenigstens zwei Tiere getrennt voneinander transportiert werden können. In diesem Sinne kann also jeweils ein getrennter Aufnahmeraum für zwei unterschiedliche Tiere bereitgestellt werden. Dem liegt die Erkenntnis zugrunde, dass sich beispielsweise zwei Tiere während einer Autofahrt streiten können, wenn sie gemeinsam in einem einzigen Raum transportiert werden. Gerade wenn jeweilige Haustiere bereits durch einen Transport gestresst sind, kann es zwischen den Tieren leicht zu einer Streitsituation kommen. Dadurch kann ein Fahrer des Kraftfahrzeugs abgelenkt werden, wodurch es potenziell zu einer gefährlichen Situation kommen kann. Zusätzlich werden die jeweiligen Tiere auch durch den getrennten Transport davon abgehalten, miteinander zu spielen, was sonst ebenfalls zu einer Ablenkung des Fahrers führen könnte. Die Transportvorrichtung kann somit besonders vielseitig eingesetzt werden, da sie auch komfortabel und sicher durch Personen genutzt werden kann, welche mehr als ein Haustier besitzen und diese in einem Kraftfahrzeug gleichzeitig transportieren möchten.

Durch das Vorsehen von jeweils zugeordneten Zugängen an gegenüberliegenden Seiten der Transportvorrichtung wird zudem ermöglicht, dass jedes zu transportierende Tier in jeweils einen der Teilräume getrennt voneinander gelangen kann. So können jeweilige Tiere bereits vor dem Beladen der Transportvorrichtung voneinander getrennt werden. Auch dadurch können jeweilige Stresssituationen, wie beispielsweise ein Gekäbbel und/oder Spielen der Tiere miteinander, zumindest unmittelbar vor Besteigen der Transportvorrichtung verhindert werden. Dadurch ist es besonders einfach, jeweilige Tiere dazu zu bringen, sich in die Transportvorrichtung und die jeweiligen Teilräume zu bewegen. Es wird ein Stressen der jeweiligen Tiere bereits vor dem Verladen vermieden. Dadurch können die Tiere dann auch bei der anschließenden Fahrt ruhiger sein.

Das Trennelement kann beispielsweise als Netz ausgebildet sein, wodurch die Transportvorrichtung insgesamt besonders leicht und kostengünstig sein kann. Alternativ kann das Trennelement beispielsweise auch als starres und/oder blickdichtes Element ausgebildet sein, wodurch die Tiere dann besonders gut voneinander getrennt sind. Insbesondere durch eine blickdichte Trennung kann eine Interaktion der Tiere miteinander, welche zu einer Ablenkung des Fahrers führen kann, besonders gut vermieden werden.

Die jeweiligen Zugänge können beispielsweise an von dem Trennelement beabstandeten Seiten der Transportvorrichtung vorgesehen sein. Der Querschnitt jeweiliger Zugänge und eine Haupterstreckungsebene des Trennelements können im Wesentlichen parallel zueinander sein. Die Zugänge können an jeweilig gegenüberliegenden Enden der Transportvorrichtung vorgesehen sein. Die Transportvorrichtung kann bezüglich einer die Zugänge verbindenden Achse und/oder bezüglich der Trennwand, insbesondere bezüglich deren Haupterstreckungsebene, symmetrisch ausgebildet sein. Die Zugänge können entsprechend im Wesentlichen symmetrisch bezüglich der Trennwand sein und mit ihrer Durchgangsöffnung auf diese weisen beziehungsweise entsprechend mit ihrem Querschnitt im Wesentlichen parallel zu der Trennwand beabstandet von dieser angeordnet sein. Durch die jeweiligen Symmetrien ist die Transportvorrichtung besonders kostengünstig und einfach zu fertigen, da jeweilige Elemente, wie beispielsweise die Seitenelemente, als Gleichteile mehrfach verbaut sein können.

Das Bodenelement kann eine Bodenfläche ausbilden, welche für ein Sitzen, Stehen und/oder Liegen eines zu transportierenden Tieres darauf geeignet ist. Entsprechend kann ein einzelnes Bodenelement auch die Bodenfläche jeweiliger zugeordneter Teilräume ausbilden. Alternativ kann beispielsweise auch pro Teilraum ein Bodenelement vorgesehen sein. Vorzugsweise ist die Bodenfläche im Wesentlichen horizontal ausgerichtet, wenn die Transportvorrichtung in dem Innenraum des Kraftfahrzeugs angeordnet ist, insbesondere wenn diese dort befestigt ist. Jeweilige Seitenelemente können eine Seitenfläche ausbilden, welche insbesondere zur seitlichen Abstützung jeweiliger zu transportierender Tiere während einer Kurvenfahrt, eines Beschleunigens, und/oder eines Bremsens geeignet ist. Entsprechend können sich jeweilige zu transportierende Tiere auch seitlich an der Seitenfläche des Seitenelements anlehnen. Vorzugsweise sind jeweilige Seitenflächen im Wesentlichen vertikal ausgerichtet, wenn die Transportvorrichtung in dem Innenraum des Kraftfahrzeugs angeordnet ist, insbesondere dort befestigt ist. Jeweilige Seitenflächen und/oder Bodenflächen können auch durch eine Mehrzahl von Bodenelementen und/oder Seitenelementen gebildet werden. Pro Teilraum können auch jeweils zwei zugeordnete Seitenelemente vorgesehen sein statt zwei Seitenelemente, welche die zwei Seiten beider Teilräume begrenzen.

Das Trennelement kann eine Trennfläche ausbilden, mittels welcher jeweilige Teilräume des Aufnahmeraums in Richtung des Trennelements hin begrenzt sind, wobei die Trennfläche an einem von dem jeweiligen zugeordneten Zugang abgewandten Ende des jeweiligen Teilraums angeordnet sein kann. Vorzugsweise ist die Trennfläche dabei ebenfalls im Wesentlichen vertikal bei Einbaulage der Transportvorrichtung in dem Innenraum des Kraftfahrzeugs ausgerichtet. Die Trennfläche kann dabei im Wesentlichen die Funktion einer weiteren Seitenfläche übernehmen, vorzugsweise in Fahrzeugquerrichtung bei Anordnung im Innenraum des Kraftfahrzeugs. Vorzugsweise erstreckt sich dabei auch das Trennelement bei Einbaulage im Innenraum des Kraftfahrzeugs in einer vertikalen Ebene. Das Trennelement kann sich von einem Seitenelement zum anderen Seitenelement erstrecken. Vorzugsweise ist das Trennelement orthogonal zu Seitenflächen des Seitenelements ausgerichtet. Das Trennelement kann auch teilweise nicht zwischen den Seitenelementen angeordnet sein, beispielsweise indem es in Hochrichtung über die Seitenelemente hinausragt. Vorzugsweise ist das Trennelement wenigstens teilweise oder auch komplett oberhalb des Bodenelements im Aufnahmeraum der Transportvorrichtung angeordnet.

Jeweilige Zugänge zu den Teilräumen können durch eine entsprechende Durchgangsöffnung in jeweils einer Seite der Transportvorrichtung gebildet sein. Beispielsweise kann eine Zugangsöffnung sich von einem Seitenelement bis zum gegenüberliegenden anderen Seitenelement erstrecken. Die Zugänge können dabei ebenfalls orthogonal zu Seitenflächen des Seitenelements ausgerichtet sein. Jeweilige Zugänge können sich bei Einbaulage der Transportvorrichtung in dem Innenraum des Kraftfahrzeugs in einer vertikalen Ebene erstrecken, insbesondere in einer im Wesentlichen zu dem Trennelement parallelen Ebene.

Jeweilige gegenüberliegende Seitenelemente können an gegenüberliegenden Seiten des Bodenelements und/oder der Transportvorrichtung angeordnet sein, insbesondere an deren Außenseiten und/oder Außenkanten. Jeweilige Bodenelemente und/oder Seitenelemente können fest oder lösbar miteinander verbunden sein. Beispielsweise kann jedes Seitenelement fest mit dem Bodenelement verschraubt sein. Alternativ können jeweilige Bodenelemente und Seitenelemente auch einstückig aus einem einzigen Bauteil gebildet sein, beispielsweise einem Spritzgussbauteil. Jeweilige Bodenelemente und Seitenelemente können starr ausgebildet sein. Das Bodenelement kann im Wesentlichen zwischen den gegenüberliegenden Seitenelementen angeordnet sein.

Die Transportvorrichtung kann beispielsweise dazu ausgebildet sein, oberhalb einer Sitzfläche eines Sitzes des Kraftfahrzeugs lösbar in dem Kraftfahrzeuginnenraum befestigt zu werden. Vorzugsweise wird die Transportvorrichtung dabei auf eine Sitzbank und/oder auf einer hinteren Sitzreihe des Kraftfahrzeugs befestigt. Die Transportvorrichtung kann sich dabei im Wesentlichen entlang der gesamten Sitzreihe und/oder Sitzbank erstrecken, also im Wesentlichen über die gesamte Breite des Fahrzeuginnenraums. Die jeweilige Einbaulage beziehungsweise Montageposition der Transportvorrichtung in dem Innenraum des Kraftfahrzeugs kann dabei durch jeweilige Befestigungselemente vorgegeben sein.

In weiterer vorteilhafter Ausgestaltung der Transportvorrichtung ist es vorgesehen, dass die Transportvorrichtung den Aufnahmeraum durch jeweilige Seitenelemente umlaufend um das Bodenelement seitlich begrenzt und das Trennelement eine seitliche Begrenzung der Teilräume in dem Aufnahmeraum bildet. Der Aufnahmeraum beziehungsweise die Transportvorrichtung kann also nach Art einer Box ausgebildet sein. Ebenso können so auch jeweilige Teilräume nach Art einer Box ausgebildet sein. Das Trennelement kann dabei beispielsweise mittig in dem Aufnahmeraum angeordnet sein, insbesondere mittig an den Seitenelementen und/oder mittig zwischen den Zugängen. Das Trennelement kann dann den Aufnahmeraum in zwei jeweils ebenfalls boxförmig ausgestaltete Teilräume unterteilen. Jeweilige Zugänge zu den Teilräumen können dabei als Durchgangsöffnung und/oder Aussparungen in dem seitlich umlaufenden Rand in jeweiligen Seitenelementen ausgebildet sein. Die jeweiligen Seitenelemente können dabei gemeinsam durch ein einziges Bauteil gebildet sein.

Durch die umlaufenden Seitenelemente wird der Aufnahmeraum im Wesentlichen vollständig in seitlicher Richtung begrenzt, sodass darin befindliche Tiere besonders sicher transportiert werden können. Es wird eine seitliche Abstützung im Wesentlichen in alle horizontalen Richtungen ermöglicht. Ergänzend hierzu können auch jeweilige Deckenelemente vorgesehen sein, um den Aufnahmeraum und auch die Teilräume nach oben zu begrenzen. Dann wird eine Transportvorrichtung mit in einer im Wesentlichen geschlossenen Box geschaffen, in welcher wenigstens zwei im Wesentlichen geschlossene Teilräume vorgesehen sind. So können die Tiere auch nicht an beziehungsweise über eine Oberseite der Transportvorrichtung zueinander gelangen und auch nicht im Falle eines Verkehrsunfalls aus dieser herausgeschleudert werden.

In weiterer vorteilhafter Ausgestaltung der Transportvorrichtung ist es vorgesehen, dass das wenigstens eine Trennelement lösbar an dem Bodenelement und/oder an wenigstens einem Seitenelement in dem Aufnahmeraum befestigt ist, insbesondere mittels eines Reißverschlusses, eines Klettverschlusses und/oder einer Schnappverbindung. Dadurch ist die Transportvorrichtung besonders vielseitig einsetzbar, da das Trennelement in diese bedarfsgerecht eingesetzt und aus dieser entnommen werden kann. Dadurch kann je nach Bedarf beispielsweise ein großer, einzelner Aufnahmeraum für ein großes, einzelnes Tier zur Verfügung gestellt werden oder zwei Teilräume zum gleichzeitigen, sicheren Transport von zwei kleineren Tieren. Ein Reißverschluss ermöglicht dabei eine im Wesentlichen umlaufende Befestigung des Trennelements. Dadurch kann insbesondere ein biegeschlaffes Trennelement einfach genutzt werden. Darüber hinaus kann ein Reißverschluss von jeweiligen Tieren in den Teilräumen nicht ohne Weiteres gelöst werden. Zudem gibt es so auch keine Freiräume zwischen jeweiligen Befestigungspunkten, durch die beispielsweise ein Hund seine Tatze strecken könnte. Dadurch sind jeweilige Tiere besonders gut voneinander getrennt. Ein Klettverschluss ist eine besonders leicht zu lösende und zu befestigende Verbindung, welche zudem ein besonders geringes Gewicht aufweist und besonders kostengünstig ist. Eine Schnappverbindung kann besonders robust sein, hohe Lasten aufnehmen und ebenfalls schnell zu lösen und zu verbinden sein. Beispielsweise können als Schnappverbindung jeweilige Druckknöpfe voneinander beabstandet entlang einer Außenkante des Trennelements zu dessen Befestigung vorgesehen sein. Vorzugsweise ist das Trennelement sowohl an den gegenüberliegenden Seitenelementen als auch am Bodenelement befestigt, sodass die Befestigung und damit auch das Trennelement besonders hohe Lasten aufnehmen kann.

In weiterer vorteilhafter Ausgestaltung der Transportvorrichtung ist es vorgesehen, dass für die Transportvorrichtung wenigstens zwei voneinander beabstandete, unterschiedliche Positionen zur Befestigung des Trennelements in dem Aufnahmeraum vorgesehen sind. Dafür können beispielsweise mehrere Schienen zum Einstecken des Trennelements vorgesehen sein, welche voneinander beabstandet an dem Bodenelement und/oder den Seitenelementen vorgesehen sind. Die Schienen können dabei auch so ausgebildet sein, dass das Trennelement entlang diesen verschoben werden kann und dann in einer bestimmten Position arretiert werden kann, beispielsweise mittels einer Schraube. Beispielsweise können auch mehrere voneinander beabstandete Reihen von Druckknöpfen zum Befestigen des Trennelements an unterschiedlichen Positionen vorgesehen sein. Mittels der unterschiedlichen Positionen ist die Transportvorrichtung besonders flexibel einsetzbar, da der Aufnahmeraum bedarfsgerecht in unterschiedlich große Teilräume aufgeteilt werden kann. Die Transportvorrichtung ist so konfigurierbar ausgebildet. Beispielsweise kann der Aufnahmeraum in zwei gleich große Teilräume unterteilt werden, um zwei gleich große Tiere komfortabel zu transportieren. Ist dagegen eines der Tiere beispielsweise wesentlich größer als ein anderes der Tiere, kann die Tiertransportvorrichtung so konfiguriert werden, dass ein kleinerer Teilraum beispielsweise ein Drittel des Aufnahmeraums umfassen und ein anderer, größerer Teilraum zwei Drittel des Aufnahmeraums. Entsprechend kann dann immer noch ein komfortabler Aufnahmeraum für das größere Tier und ein ausreichend großer Teilraum für das kleinere Tier zur Verfügung gestellt werden. Jeweilige ungenutzte Befestigungselemente können beispielsweise mit einem Verkleidungsteil verdeckt sein, sodass dort eine Verschmutzung verhindert werden kann. Beispielsweise können die Schienen mit einer flexiblen Gummilippe versehen sein, welche diese in Richtung des Aufnahmeraums wenigstens teilweise abdichtet.

Durch das Vorsehen mehrerer voneinander beabstandeter unterschiedlicher Positionen zur Befestigung des Trennelements können auch mehrere Trennelemente an der Transportvorrichtung angeordnet werden. Beispielsweise können zwei unterschiedliche Positionen zur Befestigung jeweils mit einem Trennelement versehen werden. Dadurch können auch mehr als zwei Teilräume in dem Aufnahmeraum abgetrennt werden. Dabei kann es vorgesehen sein, dass jeweilige zusätzliche Teilräume keinen zugeordneten Zugang aufweisen. Beispielsweise kann von einer Seite ein Tier in einen Teilraum gebracht werden, welcher durch eine erste Trennwand begrenzt ist. Anschließend kann von dem anderen, gegenüberliegenden Zugang ein weiteres Tier in einen dortigen Teilraum bis zu dem ersten Trennelement gebracht werden, und dann dieser Teilraum durch ein zweites Trennelement, welches dem zweiten Tier den Zugang versperrt, teilweise abgetrennt werden. Dadurch wird ein dritter Teilraum gebildet, in welchen dann durch den zweiten Zugang ein drittes Tier gebracht werden kann. Das erste und das zweite Trennelement sind in einer solchen Konfiguration im Wesentlichen parallel zueinander angeordnet.

Alternativ oder zusätzlich können auch jeweilige weitere Trennelemente vorgesehen sein, welche anders räumlich in dem Aufnahmeraum ausgerichtet sind. Beispielsweise kann ein erstes Trennelement sich von den zwei gegenüberliegenden Seitenelementen in der Mitte des Aufnahmeraums erstrecken und damit auch die beiden Zugänge voneinander trennen. Ein weiteres Trennelement kann dagegen orthogonal zu dem ersten Trennelement in dem Aufnahmeraum angeordnet werden, sodass der Aufnahmeraum insgesamt T-förmig unterteilt wird. Einer der zwei Teilräume mit einem zugeordneten Zugang wird so in zwei Unterteilräume unterteilt, welche durch den zugeordneten Zugang gleichzeitig zu erreichen sind.

In weiterer vorteilhafter Ausgestaltung der Transportvorrichtung ist es vorgesehen, dass die Transportvorrichtung wenigstens eine Zugangsöffnung zum Einführen des Trennelements in den Aufnahmeraum und/oder Entnehmen aus dem Aufnahmeraum aufweist, insbesondere an einer dem Bodenelement gegenüberliegenden Seite der Transportvorrichtung. Diese Zugangsöffnung kann also insbesondere oben an der Transportvorrichtung vorgesehen sein, insbesondere an einem Deckenelement oder durch das Vorsehen keines Deckenelements. Alternativ kann die Zugangsöffnung aber auch beispielsweise an Seitenelementen und/oder an Bodenelementen vorgesehen sein, beispielsweise in Form einer Durchgangsöffnung. Beispielsweise kann in einem Seitenelement ein Schlitz vorgesehen sein, durch welchen ein plattenförmiges Trennelement in den Aufnahmeraum geschoben und auch wieder aus diesem entnommen werden kann. Jeweilige Zugangsöffnungen können dabei durch ein Abdeckelement freigebbar verschlossen werden. Beispielsweise kann bei einer oberseitigen Zugangsöffnung diese durch ein Deckenelement verschlossen werden. Die Transportvorrichtung kann aber auch frei von einem Deckenelement sein. Durch die wenigstens eine Zugangsöffnung können jeweilige Trennelemente besonders einfach in dem Aufnahmeraum angeordnet und auch wieder aus diesem entnommen werden. Bei jeweiligen Durchgangsöffnungen in dem Bodenelement und/oder den Seitenelementen und/oder den möglicherweise vorgesehenen Deckenelementen können diese gleichzeitig dazu dienen, das Trennelement in dem Aufnahmeraum zu halten. Beispielsweise kann ein plattenförmiges Trennelement durch das Anordnen in korrespondierenden Schlitzen von den Seitenelementen dort abgestützt sein. Dabei kann das Trennelement in einer solchen Position arretiert werden, beispielsweise mittels einer Flügelschraube, um auch ein Bewegen entlang der jeweiligen Durchgangsöffnungen zu verhindern. Bei einer Zugangsöffnung an einer Oberseite der Transportvorrichtung können jeweilige Trennelemente besonders einfach in den Aufnahmeraum eingeführt und aus diesem entnommen werden, während die Transportvorrichtung weiterhin in einem Innenraum eines Kraftfahrzeugs angeordnet ist.

In weiterer vorteilhafter Ausgestaltung der Transportvorrichtung ist es vorgesehen, dass die Transportvorrichtung zum freigebbaren Verschließen der Zugangsöffnung zum Einführen des Trennelements an einer dem Bodenelement gegenüberliegenden Seite der Transportvorrichtung ein Abdeckelement aufweist, insbesondere ein Netz. Bei diesem Abdeckelement kann es sich also um ein Deckenelement handeln. Dadurch kann gleichzeitig eine im Wesentlichen geschlossene Box bereitgestellt werden. Wenn das Abdeckelement in Form eines Netzes ausgebildet ist, kann die Transportvorrichtung besonders leicht sein und zudem besonders zuverlässig eine ausreichende Belüftung der jeweiligen Teilräume sichergestellt werden. Zudem erfordert ein solches Netz keine zusätzliche Verstärkung an den Seitenelementen, um dieses sicher befestigen zu können. Das Abdeckelement kann auch beispielsweise als verschwenkbare Tür ausgebildet sein, wodurch dieses besonders einfach zu öffnen und zu schließen ist.

In weiterer vorteilhafter Ausgestaltung der Transportvorrichtung ist es vorgesehen, dass jeweilige Zugänge als Aussparung in jeweils einem zugeordneten weiteren Seitenelement ausgebildet sind, welche insbesondere mittels jeweiliger verstellbarer Verschlusselemente freigebbar und verschließbar sind. Diese weiteren Seitenelemente können sich beispielsweise zwischen den Seitenelementen ohne Zugang erstrecken. Dadurch kann eine definierte Durchgangsöffnung als Zugang bereitgestellt werden. Zudem können diese weiteren Seitenelemente auch eine seitliche Abstützung für die Tiere in dem Aufnahmeraum in Richtung der jeweiligen Zugänge zur Verfügung stellen, wodurch jeweilige Tiere besonders sicher zu transportieren sind. Mittels der Verschlusselemente kann besonders gut sichergestellt werden, dass die Tiere in ihrem jeweiligen Teilraum verbleiben. Bei dem Verschlusselement kann es sich insbesondere um eine Tür handeln, welche an dem weiteren Seitenelement, an den Seitenelementen und/oder dem Bodenelement beweglich befestigt ist, beispielsweise drehbar. Vorzugsweise ist das Verschlusselement in Verschlussposition und/oder Freigabestellung arretierbar. Dadurch kann eine ungewollte Freigabe und/oder ein ungewollter Verschluss der jeweiligen Zugänge vermieden werden.

In weiterer vorteilhafter Ausgestaltung der Transportvorrichtung ist es vorgesehen, dass die jeweiligen Verschlusselemente als biegeschlaffe Elemente ausgebildet sind, welche in ihrer Freigabestellung bei im Innenraum des Kraftfahrzeugs angeordneter Transportvorrichtung auf einer angrenzenden Ablagefläche des Kraftfahrzeugs wenigstens bereichsweise aufliegen können. Die Verschlusselemente können dafür beispielsweise als Textilelement ausgebildet sein. Diese können dann nach Art eines aufklappbaren Teppichs angrenzende Kanten und/oder überstehende Teile eines Sitzes vor Beschädigung beim Beladen der Transportvorrichtung schützen. Beispielsweise kann sich das Verschlusselement über einen Teil einer Sitzfläche eines Sitzes des Kraftfahrzeugs legen, auf welcher die Transportvorrichtung angeordnet ist, und/oder auch über eine seitliche Türschwelle des Kraftfahrzeugs. Entsprechend kann dann ein Tier in den Teilraum über das Verschlusselement laufen, ohne dass der empfindliche Lack und/oder ein Sitzleder des Sitzes durch seine Krallen verkratzt werden können.

In weiterer vorteilhafter Ausgestaltung der Transportvorrichtung ist vorgesehen, dass die Transportvorrichtung ein U-förmiges Profil aufweist, mittels welchem das Trennelement in dem Aufnahmeraum abgestützt ist. Das U-förmige Profil kann dabei auch als U-Profil bezeichnet werden. Das U-förmige Profil kann dabei den Aufnahmeraum im Wesentlichen einfassen. Jeweilige Schenkel des Profils können den Aufnahmeraum wenigstens teilweise einschließen und/oder innerhalb des Aufnahmeraums angeordnet sein. Beispielsweise können jeweilige seitliche Schenkel in oder an den Seitenelementen angeordnet sein, und ein diese verbindender Schenkel - welcher auch Bodenschenkel genannt werden kann - kann in oder an dem Bodenelement angeordnet sein. Bei einer Anordnung in den jeweiligen Elementen kann eine dem Aufnahmeraum zugewandte Seite des U-Profils bündig mit jeweiligen Bodenflächen und/oder Seitenflächen abschließen. Dadurch kann ein besonders komfortabler und großer Aufnahmeraum bereitgestellt werden. Das Profil kann dabei jeweilige Trennelemente besonders sicher und stabil in dem Aufnahmeraum halten, sodass das Trennelement hohe Lasten aufnehmen kann. Gleichzeitig kann das U-förmige Profil auch dazu dienen, die jeweiligen Seitenelemente an dem Bodenelement zu befestigen und/oder diese seitlich abzustützen. Dadurch kann die Transportvorrichtung besonders robust sein.

In weiterer vorteilhafter Ausgestaltung der Transportvorrichtung ist es vorgesehen, dass jeweilige dem Aufnahmeraum und/oder jeweilige den Teilräumen zugewandte Seiten des Bodenelements, der jeweiligen Seitenelemente und/oder des Trennelements gepolstert sind und/oder mit einer Außenschicht bedeckt sind, insbesondere einer Lederschicht, einer Kunstlederschicht oder einer Textilschicht. Durch eine jeweilige Polsterung kann die Transportvorrichtung besonders komfortabel für jeweilige darin zu transportierende Tiere sein. Dadurch können diese besonders ruhig sein, wodurch dann insgesamt wieder die Sicherheit auch für jeweilige Passagiere des Kraftfahrzeugs erhöht ist. Eine Polsterung kann beispielsweise durch eine Watteschicht oder ein Abstandsgewirke gebildet sein, wobei das Abstandsgewirke eine Luftströmung zur Lüftung durch die Polsterung ermöglichen kann. Eine Lederschicht ist besonders hochwertig und robust. Eine Kunstlederschicht kann besonders kostengünstig sein. Eine Textilschicht kann besonders angenehm für jeweilige zu transportierende Tiere sein und zudem einfach als waschbarer Bezug ausgebildet sein. Jeweilige Außenschichten können wasserundurchlässig sein, wodurch die Transportvorrichtung besonders hygienisch und leicht zu reinigen sein kann. Jeweilige Außenschichten können zur Reinigung abnehmbar ausgebildet sein. Vorzugsweise sind die Außenschichten kratzfest ausgebildet. Für eine Temperierung des Aufnahmeraums können jeweilige Außenschichten auch wenigstens bereichsweise luftdurchlässig ausgebildet sein. Beispielsweise kann eine Textilschicht auch als Membran ausgebildet sein, welche eine Belüftung von einer dem Aufnahmeraum abgewandten Seite durch diese hindurch ermöglicht, während jeweilige Flüssigkeiten aus dem Aufnahmeraum nicht in die umgekehrte Richtung aus diesem heraustreten können.

In weiterer vorteilhafter Ausgestaltung der Transportvorrichtung ist es vorgesehen, dass das Bodenelement, jeweilige Seitenelemente und/oder das Trennelement plattenförmig ausgebildet seien. Dadurch kann die Transportvorrichtung eine besonders einfache Konstruktion aufweisen und jeweilige Elemente besonders kostengünstig und robust sein. Beispielsweise können die jeweiligen Elemente als MFD Platten ausgebildet sein. Alternativ können die jeweiligen Elemente auch mehrschichtige Platten sein, welche beispielsweise als Polsterung und auch zur Ermöglichung einer Durchlüftung ein Abstandsgewirke mit einer Hülle aufweisen. Die Bodenfläche, jeweilige Seitenflächen und jeweilige Trennflächen können durch eine zur Haupterstreckungsebene parallele Oberfläche der jeweiligen plattenförmigen Elemente gebildet sein.

In weiterer vorteilhafter Ausgestaltung der Transportvorrichtung ist es vorgesehen, dass die Transportvorrichtung wenigstens ein Befestigungselement aufweist, welches dazu ausgebildet ist, die Transportvorrichtung lösbar an einem Fahrzeugsitz des Kraftfahrzeugs zu befestigen, wenn die Transportvorrichtung auf dem Fahrzeugsitz angeordnet ist. Vorzugsweise ist die Transportvorrichtung zur Befestigung an einer Rückbank des Kraftfahrzeugs ausgebildet. Das Befestigungselement kann dabei Teil einer Isofix-Befestigungsvorrichtung sein, wodurch die Transportvorrichtung besonders einfach an korrespondierenden, standardisierten Isofix-Elementen des Kraftfahrzeugs lösbar befestigt werden kann.

In weiterer vorteilhafter Ausgestaltung der Transportvorrichtung ist es vorgesehen, dass die Transportvorrichtung dazu ausgebildet ist, dass bei Befestigung in dem Innenraum des Kraftfahrzeugs einer der Zugänge der ersten Seitentür des Kraftfahrzeugs zugewandt ist, und ein anderer der Zugänge einer der ersten Seitentür gegenüberliegenden zweiten Seitentür zugewandt ist. Durch eine so ausgebildete Transportvorrichtung können die Tiere getrennt von unterschiedlichen Seiten des Kraftfahrzeugs in den jeweiligen Teilraum gelangen, sodass diese bereits vor Besteigen der Transportrichtung sehr gut voneinander räumlich getrennt sind. Das Trennelement ist dann beispielsweise zwischen den zwei Seitentüren angeordnet und kann im Wesentlichen parallel zu diesen ausgerichtet sein.

Das Bodenelement kann beispielsweise eine Bodenfläche von 0,3 m² bis 2 m² aufweisen, bevorzugt 1 m² bis 1,3 m². Eine Länge des Bodenelements kann beispielsweise 0,3 m bis 2,5 m betragen, bevorzugt 0,5 m bis 1,5 m. Eine Breite des Bodenelements kann beispielsweise 0,2 m bis 1 m betragen, bevorzugt 0,6 m bis 1 m. Die Breite des Bodenelements kann dabei zu einer Länge einer Sitzfläche in Fahrzeuglängsrichtung korrespondieren und/oder die Länge des Bodenelements zu einer Breite der Sitzfläche in Fahrzeugquerrichtung. Jeweilige Seitenelemente können beispielsweise eine Länge aufweisen, welche zu einer Länge des Bodenelements korrespondiert. Ein Querschnitt der jeweiligen Zugänge kann beispielsweise 0,2 m² bis 1 m² betragen, bevorzugt 0,4 m² bis 0,6 m². Die Dicke der Seitenelemente und des Bodenelements kann beispielsweise 1 cm bis 10 cm betragen, bevorzugt 2 cm bis 6 cm. Das Trennelement kann beispielsweise eine Breite aufweisen, welche im Wesentlichen der Breite des Bodenelements entspricht. Eine Höhe der jeweiligen Seitenelemente kann beispielsweise 0,05 m bis 1 m betragen, bevorzugt 0,3 m bis 0,6 m. Eine Höhe des Trennelements kann beispielsweise zu einer Höhe der jeweiligen Seitenelemente korrespondieren. Seitenelemente an und/oder mit den Zugängen können jeweils eine Aussparung zum Ausbilden des jeweiligen Zugangs aufweisen, wobei die Seitenelemente dort dann entsprechend eine geringere Höhe aufweisen können.

Ein weiterer Aspekt betrifft eine Transportvorrichtung für Tiere zur Anordnung in einem Innenraum eines Kraftfahrzeugs mit wenigstens einem Bodenelement und mit wenigstens einem Seitenelement, welche zusammen einen Aufnahmeraum definieren, wobei in dem Aufnahmeraum wenigstens zwei Trennelemente angeordnet sind, mittels welchen der Aufnahmeraum in drei oder mehr Teilräume unterteilt ist. Entsprechend ist diese Transportvorrichtung besonders flexibel für drei oder mehr Tiere nutzbar. Jeweilige Zugänge können dabei nebeneinander angeordnet sein. Diese Transportvorrichtung kann besonders gut in einem Kofferraum beziehungsweise Heckladebereich eines Kraftfahrzeugs genutzt werden. Jeweilige Ausgestaltungsformen der Transportvorrichtung mit den zwei gegenüberliegenden Zugängen können dabei vorteilhaften Ausgestaltungsformen der Transportvorrichtung gemäß diesem weiteren Aspekt entsprechen und umgekehrt.

Ein zusätzlicher Aspekt betrifft zudem ein Kraftfahrzeug mit einer der genannten Transportvorrichtungen. Die Transportvorrichtung ist dabei lösbar in einem Innenraum dem Kraftfahrzeug befestigt. Der Innenraum kann dabei ein Kofferraum, Heckladeraum und/oder Passagierinnenraum sein. Entsprechend kann das Kraftfahrzeug eine Befestigungsvorrichtung mit korrespondierenden Befestigungselementen an dem Kraftfahrzeug und der Transportvorrichtung umfassen. Beispielsweise kann es sich bei der Befestigungsvorrichtung um ein Isofix-System handeln. Vorzugsweise sind jeweilige Zugänge der Transportvorrichtung bei Anordnung beziehungsweise Befestigung in dem Innenraum jeweils einer Seitentür des Kraftfahrzeugs zugewandt und das Trennelement dazwischen angeordnet. Die Transportvorrichtung kann sich dabei in Fahrzeugquerrichtung von einer Seite des Innenraums zur anderen im Wesentlichen erstrecken. Die Länge der Transportvorrichtung zwischen den zwei gegenüberliegenden Zugängen kann also im Wesentlichen zur Fahrzeugbreite korrespondieren, insbesondere zu jeweiligen Sitzflächen, auf welchen die Transportvorrichtung angeordnet ist.

Weitere Vorteile, Merkmale und Einzelheiten der Erfindung ergeben sich aus der nachfolgenden Beschreibung bevorzugter Ausführungsbeispiele sowie anhand der Zeichnungen. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.
Figur 1 zeigt in einer schematischen Perspektivansicht eine erste Ausführungsform einer erfindungsgemäßen Transportvorrichtung für Tiere in einem Innenraum eines Kraftfahrzeugs;
Figur 2 zeigt in einer schematischen Perspektivansicht eine zweite Ausführungsform einer Transportvorrichtung für Tiere in einem Innenraum eines Kraftfahrzeugs.

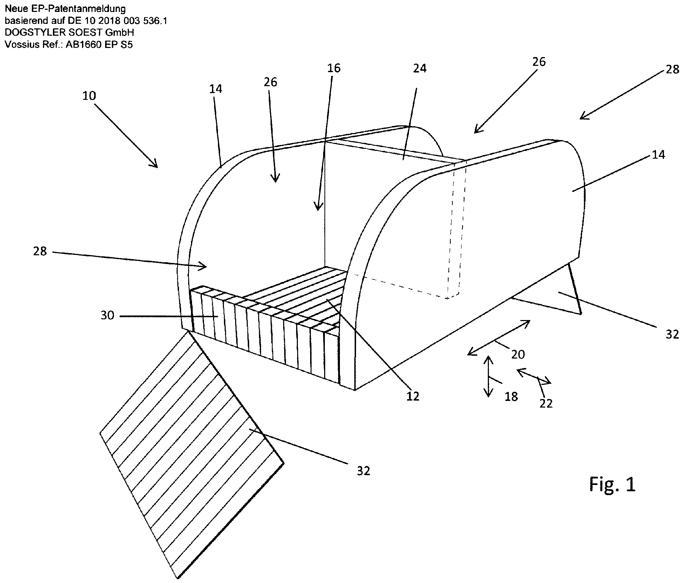

Figur 1 zeigt in einer schematischen Perspektivansicht eine Transportvorrichtung 10 für Tiere zur Anordnung in einem Innenraum eines Kraftfahrzeugs, welche auch als Tiertransportvorrichtung 10 bezeichnet werden kann. Bei dem Kraftfahrzeug handelt es sich vorzugsweise um einen Personenkraftwagen und bei dem Innenraum um den Fahrgastraum, welcher auch als Passagierinnenraum bezeichnet werden kann.

Die Transportvorrichtung 10 umfasst wenigstens ein Bodenelement 12 und zwei gegenüberliegende Seitenelemente 14, welche zusammen einen Aufnahmeraum 16 definieren. Die Transportvorrichtung 10 ist dabei auch dazu ausgelegt, auf einer hinteren Sitzbank eines Kraftfahrzeugs lösbar mittels einer Isofix-Befestigungseinrichtung befestigt zu werden. Die Transportvorrichtung 10 kann hierzu auf der Sitzfläche der Sitzbank abgestellt werden. Entsprechend entspricht die durch Pfeil 18 markierte Achse in Einbaulage im Innenraum des Kraftfahrzeugs einer Hochrichtung des Kraftfahrzeugs, während die mit Pfeil 20 markierte Achse einer Fahrzeugquerrichtung entspricht und die mit Pfeil 22 markierte Achse einer Fahrzeuglängsrichtung. Der Aufnahmeraum 16 wird also durch das Bodenelement 12 in Hochrichtung von unten begrenzt und durch die Seitenelemente 14 seitlich in Fahrzeuglängsrichtung.

In dem Aufnahmeraum 16 ist wenigstens ein Trennelement 24 zwischen den wenigsten zwei Seitenelementen 14 angeordnet, mittels welchen der Aufnahmeraum 16 in zwei Teilräume 26 unterteilt ist. Entsprechend begrenzt also das Trennelement 24 die jeweiligen Teilräume 26 in Fahrzeugquerrichtung in dem Aufnahmeraum 16. Bei der Anordnung der Transportvorrichtung 10 in einem Innenraum eines Kraftfahrzeugs ist entsprechend einer der Teilräume 26 einer linken Fahrzeugseite zugewandt, und der andere der Teilräume 26 der rechten Fahrzeugseite.

Die Transportvorrichtung 10 weist für jeden der zwei Teilräume 26 einen separaten, zugeordneten Zugang 28 auf, welche sich jeweils zwischen den wenigstens zwei Seitenelementen 14 erstrecken und an gegenüberliegenden Seiten der Transportvorrichtung 10 in Fahrzeugquerrichtung angeordnet sind. Im vorliegenden Beispiel sind also die beiden Zugänge 28 einer linken und einer rechten Fahrzeugseite zugewandt. Entsprechend kann der linke Teilraum 26 durch den linken Zugang 28 von einer linken Fahrzeugseitentür von einem Tier bestiegen werden. Der rechte Zugang 28 des rechten Teilraums 26 kann davon getrennt an der rechten Seitentür des Kraftfahrzeugs erreicht werden. Zwei zu transportierende Tiere können so getrennt voneinander in die Transportvorrichtung 10 gelangen.

Aufgrund des Trennelements 24 können zudem zwei Tiere getrennt voneinander in dem Aufnahmeraum 16 transportiert werden. Durch die Trennung können die zwei Tiere beim Transport nicht oder nur im verringerten Umfang miteinander interagieren, wodurch ein Fahrer des Kraftfahrzeugs besonders wenig abgelenkt wird. Zudem können die Tiere bereits vor dem Beladen der Transportvorrichtung 10 voneinander getrennt werden und in den Aufnahmeraum 16 beziehungsweise die Teilräume 26 durch getrennte Zugänge 28 von getrennten Seiten des Kraftfahrzeugs gelangen. Dadurch können auch Interaktionen vor dem Beladen der Transportvorrichtung 10 zwischen den jeweiligen Tieren reduziert werden, wodurch diese bereits vor dem Transport besonders ruhig sein können und zudem die Handhabung der Tiere vereinfacht sein kann.

Die beiden Zugänge 28 sind dabei durch eine Aussparung in einem jeweiligen weiteren Seitenelement 30 gebildet, welche den Aufnahmeraum 16 bzw. die Teilräume 26 in Fahrzeugquerrichtung nach Art einer hochstehenden Kante seitlich begrenzen, welche sich jedoch wesentlich weniger hoch erstreckt als die jeweiligen Seitenelemente 14 in Fahrzeuglängsrichtung.

Die jeweiligen Seitenelemente 14, die weiteren Seitenelemente 30, das Bodenelement 12 und das Trennelement 24 sind dabei jeweils aus einer MFD oder Multiplex Platte gebildet, welche außenseitig jeweils von einer Lederschicht oder Kunstlederschicht umhüllt sind und auf welchen jeweils zudem eine Polsterung auf jeweiligen Außenseiten, insbesondere dem Aufnahmeraum 16 zugewandten Seiten, vorgesehen sind. Dadurch ist die Transportvorrichtung 10 besonders robust, hochwertig und bequem für jeweilige zu transportierende Tiere.

Die jeweiligen Zugänge 28 können durch ein biegeschlaffes Verschlusselement 32 verschlossen und freigegeben werden. Bei den biegeschlaffen Verschlusselement 32 handelt es sich beispielsweise um ein Stoffstück, insbesondere in Form eines Netzes, welches vor den Zugang 28 zu dessen Verschluss gespannt wird, beispielsweise mittels eines Druckknopfs oder eines Reißverschlusses. In der Offenstellung kann sich dabei das Verschlusselement 32 über einen Bereich vor dem Zugang 28 über jeweilige Teile des Kraftfahrzeugs legen, wie beispielsweise eine hervorstehende Sitzfläche und/oder eine Schwelle an der Seitentür. Dadurch können diese Teile des Kraftfahrzeugs vor Kratzern und Verschmutzungen geschützt werden. Die jeweiligen Verschlusselemente 32 können dabei so lang sein, dass sie komplett über eine Oberseite der Transportvorrichtung 10 bis zum Trennelement 24 reichen können. Dadurch können die Verschlusselemente 32 auch als Deckelelemente fungieren und den Aufnahmeraum16 bzw. die Teilräume 26 nach oben verschließen. Dadurch kann eine geschlossene Box für den Transport der Tiere in den jeweiligen Teilräumen 26 geschaffen werden, wodurch diese auch nicht über eine Obergrenze der Transportvorrichtung 10 hinweg miteinander agieren können oder die Teilräume 26 dort ungewollt verlassen können.

Das Trennelement 24 kann dabei in unterschiedlichen Positionen an der Transportvorrichtung 10 bzw. an dem Bodenelement 12 und dem Seitenelement 14 befestigt werden. Beispielsweise können voneinander beabstandete Reißverschlüsse, Klettverschlüsse und/oder Schnappverbindungen wie Druckknöpfe vorgesehen sein, an welchen das Trennelement 24 jeweils in einer unterschiedlichen Position befestigt werden kann. Im in Figur 1 gezeigten Beispiel ist das Trennelement 24 beispielsweise mittig orthogonal zu den Seitenelementen 14 in dem Aufnahmeraum 16 befestigt. Es kann beispielsweise eine weitere Position vorgesehen sein, mittels welcher der Aufnahmeraum 16 aufgrund des anders positionierten Trennelements 24 so aufgeteilt wird, dass ein Teilraum 26 doppelt so groß ist wie ein anderer Teilraum 26. Dafür kann sich das Trennelement 24 dann beispielsweise auf einer 1/3-Position entlang der Breite der Transportvorrichtung 10 befinden. Dadurch können die jeweiligen Teilräume 26 an den unterschiedlichen Platzbedarf unterschiedlich großer zu transportierender Tiere angepasst werden. Das Trennelement 24 kann zu diesem Zweck beispielsweise oberseitig bei geöffneten Verschlusselementen 32 aus dem Aufnahmeraum 16 entnommen und in diesen wieder eingeführt werden.

Durch eine vollständige Entnahme des Trennelements 24 kann auch ein einzelner, großer Aufnahmeraum 16 ohne jeweilige Teilräume 26 zur Verfügung gestellt werden. Alternativ oder zusätzlich können auch mehrere Trennelemente 24 vorgesehen werden, wodurch dann der Aufnahmeraum 16 in mehr als zwei Teilräume 26 unterteilt werden kann. Beispielsweise kann ein weiteres, zu dem gezeigten Trennelement 24 parallel angeordnetes Trennelement vorgesehen werden, mittels welchem ein weiterer Teilraum in der Mitte des Aufnahmeraums 16 abgetrennt werden kann. Dieser weitere Teilraum ist dabei für ein Tier nur zugänglich, solange das weitere Trennelement nicht montiert ist. Dieser weitere Teilraum hat dann also keinen eigenen separaten, zugeordneten Zugang.

Das Verschlusselement 32 kann vorzugsweise lösbar an der Transportvorrichtung 10, insbesondere an den Seitenelementen 14 und/oder dem weiteren Seitenelement 30, befestigt sein. Dies ist in Fig. 1 durch die teilweise Trennung eines der zwei Verschlusselemente 32 von dem Körper der Transportvorrichtung 10 dargestellt. Dadurch kann das Verschlusselement 32 beispielsweise einfach gewaschen werden, insbesondere in einer Maschinenwäsche. Ebenso kann ein beschädigtes Verschlusselement 32 so problemlos ausgetauscht werden und/oder ein nicht benötigtes Verschlusselement 32 entfernt werden. Das Verschlusselement kann beispielsweise mittels Druckknöpfen, eines Reißverschlusses und/oder eines Klettverschlusses lösbar befestigt sein.

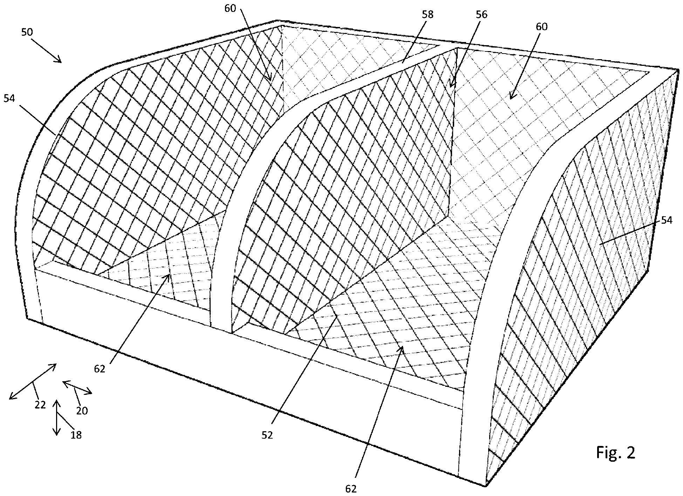

Figur 2 zeigt eine zweite Ausführungsform einer Transportvorrichtung für Tiere, welche hier mit den Bezugszeichen 50 versehen ist und auch als Tiertransportvorrichtung 50 bezeichnet werden kann. Im Folgenden sollen dabei nur die wesentlichen Unterschiede zur Tiertransportvorrichtung 10 kurz erläutert werden, ansonsten kann die Tiertransportvorrichtung 50 identisch oder zumindest ähnlich ausgebildet sein.

Die Tiertransportvorrichtung 50 ist besonders geeignet zur Anordnung in einem Kofferraum oder generell einem Heckladebereich eines Kraftfahrzeugs. Entsprechend ist in der Figur 2 die Fahrzeugquerrichtung ebenfalls mit Pfeil 20 markiert, die Fahrzeughochrichtung mit Pfeil 18 und die Fahrzeuglängsrichtung mit Pfeil 22. Die Transportvorrichtung 50 umfasst ein Bodenelement 52 und zwei Seitenelemente 54, welche zusammen einen Aufnahmeraum 56 definieren. In dem Aufnahmeraum 56 ist wenigstens ein Trennelement 58 angeordnet, mittels welchem der Aufnahmeraum 56 in zwei Teilräume 60 unterteilt ist. Beispielsweise können aber auch zwei Trennelemente vorgesehen sein, welchen den Aufnahmeraum 56 in drei Teilräume unterteilen. Jeder Teilraum 60 hat dabei ebenfalls einen zugeordneten Zugang 62, welche bei der Transportvorrichtung 50 jedoch auf der gleichen Seite angeordnet sind. Die Transportvorrichtung 50 erlaubt so den getrennten Transport von drei Tieren in einem jeweiligen separaten Teilraum 60. Durch das Vorsehen weiterer Trennelemente 58 können natürlich weitere Teilräume 60 abgetrennt werden, wodurch auch mehr als drei Tiere voneinander getrennt transportiert werden können.

Ansonsten kann die Transportvorrichtung 50 ähnlich zu der Transportvorrichtung 10 gestaltet sein.

### Bezugszeichenliste

- 10: Transportvorrichtung
- 12: Bodenelement
- 14: Seitenelement
- 16: Aufnahmeraum
- 18: Pfeil
- 20: Pfeil
- 22: Pfeil
- 24: Trennelement
- 26: Teilraum
- 28: Zugang
- 30: weiteres Seitenelement
- 32: Verschlusselement
- 50: Transportvorrichtung
- 52: Bodenelement
- 54: Seitenelement
- 56: Aufnahmeraum
- 58: Trennelement
- 60: Teilraum
- 62: Zugang

Die folgenden Aspekte sind bevorzugte Merkmale der vorliegenden Erfindung:
1. Transportvorrichtung (10) für Tiere zur Anordnung in einem Innenraum eines Kraftfahrzeugs mit wenigstens einem Bodenelement (12) und mit wenigstens zwei gegenüberliegenden Seitenelementen (14), welche zusammen einen Aufnahmeraum (16) definieren,
   wobei in dem Aufnahmeraum (16) wenigstens ein Trennelement (24) zwischen den wenigstens zwei Seitenelementen (14) angeordnet ist, mittels welchem der Aufnahmeraum (16) in zwei Teilräume (26) unterteilt ist,
   wobei die Transportvorrichtung (10) für jeden der zwei Teilräume (26) einen separaten, zugeordneten Zugang aufweist, welche sich jeweils zwischen den wenigstens zwei Seitenelementen (14) erstrecken und an gegenüberliegenden Seiten der Transportvorrichtung (10) angeordnet sind.
2. Transportvorrichtung (10) nach Aspekt 1, wobei
   die Transportvorrichtung (10) den Aufnahmeraum (16) durch jeweilige Seitenelemente (14, 30) umlaufend um das Bodenelement (12) seitlich begrenzt und das Trennelement (24) eine seitliche Begrenzung der Teilräume (26) in dem Aufnahmeraum (16) bildet.
3. Transportvorrichtung (10) nach einem der Aspekte 1 oder 2, wobei
   das wenigstens eine Trennelement (24) lösbar an dem Bodenelement (12) und/oder an wenigstens einem Seitenelement (14) in dem Aufnahmeraum (16) befestigt ist, insbesondere mittels eines Reißverschlusses, eines Klettverschlusses und/oder einer Schnappverbindung.
4. Transportvorrichtung (10) nach einem der Aspekte 1 bis 3, wobei
   wenigstens zwei voneinander beabstandete, unterschiedliche Positionen zur Befestigung des Trennelements (24) in dem Aufnahmeraum (16) vorgesehen sind.
5. Transportvorrichtung (10) nach einem der Aspekte 1 bis 4, wobei
   die Transportvorrichtung (10) wenigstens eine Zugangsöffnung zum Einführen des Trennelements (24) in den Aufnahmeraum (16) und/oder Entnehmen aus dem Aufnahmeraum (16) aufweist, insbesondere an einer dem Bodenelement (12) gegenüberliegenden Seite der Transportvorrichtung (10).
6. Transportvorrichtung (10) nach Aspekt 5, wobei
   die Transportvorrichtung (10) zum freigebbaren Verschließen der Zugangsöffnung zum Einführen des Trennelements (24) an einer dem Bodenelement (12) gegenüberliegenden Seite der Transportvorrichtung ein Abdeckelement (32) aufweist, insbesondere ein Netz.
7. Transportvorrichtung (10) nach einem der Aspekte 1 bis 6, wobei
   jeweilige Zugänge als Aussparungen in jeweils einem zugeordneten weiteren Seitenelement (30) ausgebildet sind, welche insbesondere mittels jeweiliger verstellbarer Verschlusselemente (32) freigebbar und verschließbar sind.
8. Transportvorrichtung (10) nach Aspekt 7, wobei
   die jeweiligen Verschlusselemente (32) als biegeschlaffe Elemente ausgebildet sind, welche in ihrer Freigabestellung bei im Innenraum des Kraftfahrzeugs angeordneter Transportvorrichtung (10) auf einer angrenzenden Ablagefläche des Kraftfahrzeugs wenigstens bereichsweise aufliegen können.
9. Transportvorrichtung (10) nach einem der Aspekte 1 bis 8, wobei
   die Transportvorrichtung (10) ein U-förmiges Profil aufweist, mittels welchem das Trennelement (24) in dem Aufnahmeraum (16) abgestützt ist.
10. Transportvorrichtung (10) nach einem der Aspekte 1 bis 9, wobei
   jeweilige dem Aufnahmeraum (16) und/oder jeweiligen Teilräumen (26) zugewandte Seiten des Bodenelements (12), jeweiliger Seitenelemente (14, 30) und/oder des Trennelements (24) gepolstert sind und/oder mit einer Außenschicht bedeckt sind, insbesondere einer Lederschicht, einer Kunstlederschicht oder einer Textilschicht.
11. Transportvorrichtung (10) nach einem der Aspekte 1 bis 10, wobei
   das Bodenelement (12), jeweilige Seitenelemente (14, 30) und/oder das Trennelement (24) plattenförmig ausgebildet sind.
12. Transportvorrichtung nach einem der Aspekte 1 bis 11, wobei
   die Transportvorrichtung (10) wenigstens ein Befestigungselement aufweist, welches dazu ausgebildet ist, die Transportvorrichtung (10) lösbar an einem Fahrzeugsitz des Kraftfahrzeugs zu befestigen, wenn die Transportvorrichtung auf dem Fahrzeugsitz angeordnet ist.
13. Transportvorrichtung (10) nach einem der Aspekte 1 bis 12, wobei
   die Transportvorrichtung (10) dazu ausgebildet ist, dass bei Befestigung in dem Innenraum des Kraftfahrzeugs einer der Zugänge (28) einer ersten Seitentür des Kraftfahrzeugs zugewandt ist und ein anderer der Zugänge (28) einer der ersten Seitentür gegenüberliegenden zweiten Seitentür zugewandt ist.

## Patentansprüche

1. Transportvorrichtung (10) für Tiere zur Anordnung in einem Innenraum eines Kraftfahrzeugs mit wenigstens einem Bodenelement (12) und mit wenigstens zwei gegenüberliegenden Seitenelementen (14), welche zusammen einen Aufnahmeraum (16) definieren,
wobei in dem Aufnahmeraum (16) wenigstens ein Trennelement (24) zwischen den wenigstens zwei Seitenelementen (14) angeordnet ist, mittels welchem der Aufnahmeraum (16) in zwei Teilräume (26) unterteilt ist,
wobei die Transportvorrichtung (10) für jeden der zwei Teilräume (26) einen separaten, zugeordneten Zugang aufweist, welche sich jeweils zwischen den wenigstens zwei Seitenelementen (14) erstrecken und an gegenüberliegenden Seiten der Transportvorrichtung (10) angeordnet sind, wobei
jeweilige dem Aufnahmeraum (16) und/oder jeweiligen Teilräumen (26) zugewandte Seiten jeweiliger Seitenelemente (14, 30) und/oder des Trennelements (24) gepolstert sind.

2. Transportvorrichtung (10) nach Anspruch 1, wobei
die Transportvorrichtung (10) den Aufnahmeraum (16) durch jeweilige Seitenelemente (14, 30) umlaufend um das Bodenelement (12) seitlich begrenzt und das Trennelement (24) eine seitliche Begrenzung der Teilräume (26) in dem Aufnahmeraum (16) bildet.

3. Transportvorrichtung (10) nach einem der Ansprüche 1 oder 2, wobei
das wenigstens eine Trennelement (24) lösbar an dem Bodenelement (12) und/oder an wenigstens einem Seitenelement (14) in dem Aufnahmeraum (16) befestigt ist.

4. Transportvorrichtung (10) nach einem der Ansprüche 1 bis 3, wobei
wenigstens zwei voneinander beabstandete, unterschiedliche Positionen zur Befestigung des Trennelements (24) in dem Aufnahmeraum (16) vorgesehen sind.

5. Transportvorrichtung (10) nach einem der Ansprüche 1 bis 4, wobei
die Transportvorrichtung (10) wenigstens eine Zugangsöffnung zum Einführen des Trennelements (24) in den Aufnahmeraum (16) und/oder Entnehmen aus dem Aufnahmeraum (16) aufweist.

6. Transportvorrichtung (10) nach einem der Ansprüche 5, wobei
die Transportvorrichtung (10) zum freigebbaren Verschließen der Zugangsöffnung zum Einführen des Trennelements (24) an einer dem Bodenelement (12) gegenüberliegenden Seite der Transportvorrichtung ein Abdeckelement (32) aufweist.

7. Transportvorrichtung (10) nach einem der Ansprüche 1 bis 6, wobei jeweilige Zugänge als Aussparungen in jeweils einem zugeordneten weiteren Seitenelement (30) ausgebildet sind, welche freigebbar und verschließbar sind.

8. Transportvorrichtung (10) nach Anspruch 7, wobei
die jeweiligen Verschlusselemente (32) als biegeschlaffe Elemente ausgebildet sind, welche in ihrer Freigabestellung bei im Innenraum des Kraftfahrzeugs angeordneter Transportvorrichtung (10) auf einer angrenzenden Ablagefläche des Kraftfahrzeugs wenigstens bereichsweise aufliegen können.

9. Transportvorrichtung (10) nach einem der Ansprüche 1 bis 8, wobei
die Transportvorrichtung (10) ein U-förmiges Profil aufweist, mittels welchem das Trennelement (24) in dem Aufnahmeraum (16) abgestützt ist.

10. Transportvorrichtung (10) nach einem der Ansprüche 1 bis 9, wobei
jeweilige dem Aufnahmeraum (16) und/oder jeweiligen Teilräumen (26) zugewandte Seiten des Bodenelements (12) gepolstert sind und/oder jeweilige dem Aufnahmeraum (16) und/oder jeweiligen Teilräumen (26) zugewandte Seiten des Bodenelements (12), jeweiliger Seitenelemente (14, 30) und/oder des Trennelements (24) mit einer Außenschicht bedeckt sind.

11. Transportvorrichtung (10) nach einem der Ansprüche 1 bis 10, wobei
das Bodenelement (12), jeweilige Seitenelemente (14, 30) und/oder das Trennelement (24) plattenförmig ausgebildet sind.

12. Transportvorrichtung nach einem der Ansprüche 1 bis 11, wobei
die Transportvorrichtung (10) wenigstens ein Befestigungselement aufweist, welches dazu ausgebildet ist, die Transportvorrichtung (10) lösbar an einem Fahrzeugsitz des Kraftfahrzeugs zu befestigen, wenn die Transportvorrichtung auf dem Fahrzeugsitz angeordnet ist.

13. Transportvorrichtung (10) nach einem der Ansprüche 1 bis 12, wobei
die Transportvorrichtung (10) dazu ausgebildet ist, dass bei Befestigung in dem Innenraum des Kraftfahrzeugs einer der Zugänge (28) einer ersten Seitentür des Kraftfahrzeugs zugewandt ist und ein anderer der Zugänge (28) einer der ersten Seitentür gegenüberliegenden zweiten Seitentür zugewandt ist.
